# EUROPÄISCHE PATENTANMELDUNG

(11) **EP 1 388 707 A2**
(43) Veröffentlichungstag der Anmeldung: **11.02.2004**
(21) Anmeldenummer: 03102340.1
(22) Anmeldetag: 30.07.2003
(51) Int. Cl.: F21S 8/12, F21V 11/16

(54) **Beleuchtungseinheit für Kraftfahrzeuge**

(30) Priorität: 10.08.2002 DE 10236825
(71) Anmelder: Hella KG Hueck & Co., 59552 Lippstadt (DE)
(72) Erfinder: Eichhorn, Karsten, 59320 Ennigerloh (DE); Hagedorn, Susanne, 59558 Lippstadt (DE)

(57) **Zusammenfassung**

Die Erfindung betrifft eine Beleuchtungseinheit (1,18) für Kraftfahrzeuge mit mindestens einer im Brennpunkt eines Reflektors (2) angeordneten Lichtquelle (4,19,21), wobei die Hauptabstrahlachse (7,22) der Lichtquelle (4,19,21) in einem spitzen Winkel geneigt zu dem Reflektor (2) angeordnet ist, wobei am Rand der Lichtquelle (4,19,21) ein Abschatter (5,24) angeordnet ist, derart, dass ein Randbereich eines von der Lichtquelle (4,19,21) ausgesandtes Lichtbündels (8) abgeschirmt wird und dass eine durch den Abschatter (5,24) begrenzte Grenzstrahllinie (17) gebildet wird zur Erzeugung einer scharfen Hell-/Dunkelgrenze (15).

## Beschreibung

Die Erfindung betrifft eine Beleuchtungseinheit für Kraftfahrzeuge mit mindestens einer im Brennpunkt eines Reflektors angeordneten Lichtquelle, wobei die Hauptabstrahlachse der Lichtquelle in einem spitzen Winkel geneigt zu dem Reflektor angeordnet ist.

Aus der DE 43 42 928 C2 ist eine Beleuchtungseinheit für Kraftfahrzeuge mit einem halbellipsoidförmigen Reflektor bekannt, wobei in einem Brennpunkt des Reflektors eine Lichtquelle angeordnet ist. Die Hauptabstrahlachse der Lichtquelle ist in einem spitzen Winkel zu dem Reflektor angeordnet, so dass nach einmaliger Umlenkung der von der Lichtquelle emittierten Lichtstrahlen ein Lichtbündel durch eine die Beleuchtungseinheit abdeckende Abschlussscheibe abgestrahlt wird. Die Lichtquellen können reihenförmig in Abstand zueinander angeordnet sein.

Aufgabe der vorliegenden Erfindung ist es, eine Beleuchtungseinheit für Kraftfahrzeuge derart weiterzubilden, dass eine Lichtverteilung mit einer relativ scharfen Hell-/Dunkelgrenze gebildet wird.

Zur Lösung dieser Aufgabe ist die Erfindung in Verbindung mit dem Oberbegriff des Patentanspruchs 1 dadurch gekennzeichnet, dass am Rand der Lichtquelle ein Abschatter angeordnet ist, derart, dass ein Randbereich eines von der Lichtquelle ausgesandtes Lichtbündels abgeschirmt wird und dass eine durch den Abschatter begrenzte Grenzstrahllinie gebildet wird zur Erzeugung einer scharfen Hell-/Dunkelgrenze.

Der besondere Vorteil der Erfindung besteht darin, dass durch das Zuordnen des Abschatters zu der Lichtquelle ein Randbereich des von der Lichtquelle abgestrahlten Lichtbündels absorbiert wird. Es handelt sich dabei um einen solchen Randbereich des Lichtbündels, der für die Ausbildung der Hell-/Dunkelgrenze einer vorgegebenen Lichtverteilung verantwortlich ist. Durch das quasi "Abschneiden" dieses Randbereiches des Lichtbündels kann eine kontrastreiche, scharfe Hell-/Dunkelgrenze verwirklicht werden. Ein weiterer Vorteil besteht darin, dass bei Verwendung einer Leuchtdiode als Lichtquelle unerwünschte Verzerrungen durch Farbeffekte der Randstrahlen durch "Ausblendung" vermieden werden.

Nach einer bevorzugten Ausführungsform ist der Abschatter auf einer dem Lichtaustritt der Beleuchtungseinheit zugewandten Seite der Lichtquelle angeordnet, wobei der Reflektor derart ausgebildet ist, dass entfernt zu der Lichtquelle angeordnete Reflektorflächen zur Bildung von relativ kleinen, die Hell-/Dunkelgrenze bildenden Lichtflecken dienen.

Nach einer Weiterbildung der Erfindung weist der Reflektor zum einen ein zu der Lichtquelle nah angeordnetes erstes Reflektorsegment mit Reflektorflächen auf, die das von der Lichtquelle abgesandte Lichtbündel entsprechend relativ großer Lichtflecken abbilden zur Bildung einer Basislichtverteilung unterhalb der Hell-/Dunkelgrenze. Zum anderen ist ein zweites Reflektorsegment mit Reflektorflächen in einem größeren Abstand als das erste Reflektorsegment zu der Lichtquelle angeordnet, so dass das von der Lichtquelle abgesandte Lichtbündel entsprechend kleiner Lichtflecken zur Bildung einer Verstärkungslichtverteilung direkt unterhalb der Hell-/Dunkelgrenze abgebildet wird. Diese Lichtflecken (Lichtflächen) der Verstärkungslichtverteilung ermöglichen die Kontraststeigerung entlang der Hell-/Dunkelgrenze. Der Kontrast wird weiter dadurch erhöht, dass durch den Abschatter ein Teil dieser Verstärkungslichtverteilung abgeschnitten ist, so dass das Maximum dieser Verstärkungslichtverteilung näher zur Hell-/Dunkelgrenze hin angeordnet ist.

Ausführungsbeispiele der Erfindung werden nachfolgend anhand der Zeichnungen näher erläutert.

Es zeigen:
- Figur 1: eine perspektivische teilweise Darstellung einer Beleuchtungseinheit,
- Figur 2: eine Seitenansicht einer einzelnen Lichtquelle mit einem Abschatter,
- Figur 3: eine Darstellung der Lichtverteilung von in der Figur 1 dargestellten Lichtbündeln einer einzigen Lichtquelle,
- Figur 4: eine Draufsicht auf eine Beleuchtungseinheit nach einer zweiten Ausführungsform,
- Figur 5: eine Draufsicht auf eine Beleuchtungseinheit nach einer dritten Ausführungsform und
- Figur 6: einer Draufsicht auf eine Beleuchtungseinheit nach einer vierten Ausführungsform.

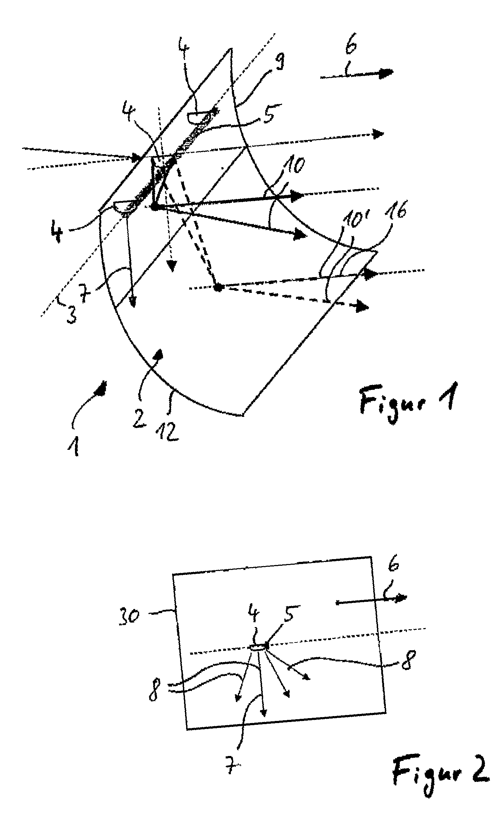

Eine Beleuchtungseinheit 1 nach einer ersten Ausführungsform gemäß Figur 1 bis 3 besteht im wesentlichen aus einem rinnenförmigen Reflektor 2 und einer Mehrzahl von in einer Reihe entlang einer Brennlinie 3 des Reflektors 2 verlaufenden Lichtquellen 4 sowie einem Abschatter 5.

Die Beleuchtungseinheit 1 kann vorzugsweise als Scheinwerfer in einem Kraftfahrzeug eingesetzt werden. Die Lichtquellen 4 sind als Halbleiterlichtquellen, vorzugsweise als Leuchtdioden (LED) ausgebildet. Die Beleuchtungseinheit 1 kann beispielsweise zur Erzeugung eines Nebellichtes oder Kurvenlichtes dienen.

Der Abschatter 5 ist als durchgehende Abschattleiste ausgebildet, die auf einer einer Lichtaustrittsrichtung 6 zugewandten Seite entlang der linienförmig angeordneten Lichtquellen 4 verläuft. Eine Hauptabstrahlrichtung 7 der Lichtquellen 4 ist im wesentlichen senkrecht zur Lichtaustrittsrichtung 6 der Beleuchtungseinheit 1 angeordnet.

Wie aus Figur 2 deutlich wird, kann die Abschatterleiste 5 unmittelbar randseitig an den Lichtquellen 4 angeordnet sein, wobei ein Teil des von der Lichtquelle 4 abgesandten Lichtbündels 8 abgeschirmt wird.

Wie aus Figur 1 ersichtlich ist, sind die Hauptabstrahlrichtungen 7 der Lichtquellen 4 in einem spitzen Winkel zu einer Mittelebene des Reflektors 2 angeordnet. Der Reflektor 2 ist rinnenförmig bzw. teilzylinderförmig ausgebildet und weist ein zu den Lichtquellen 4 relativ nah angeordnetes erstes Reflektorsegment 9 mit Reflektorflächen auf, an denen ein von der Lichtquelle 4 abgegebenes Lichtbündel 10 entsprechend einer Basislichtverteilung 11 abgebildet wird. Diese Basislichtverteilung 11 dient zur Erzeugung einer vorgegebenen Lichtverteilung, beispielsweise Nebellicht usw..

Der Reflektor 2 weist ein relativ zu der Lichtquelle 4 entfernt angeordnetes zweites Reflektorsegment 12 mit Reflektorflächen auf, die das von der Lichtquelle 4 ausgesandte Lichtbündel 10' entsprechend einer Verstärkungslichtverteilung 13 abbilden. Diese Verstärkungslichtverteilung 13 wird im Vergleich zu der Basislichtverteilung 11 durch relativ kleine Lichtflecken 14 (Lichtflächen) auf einem vorgesehenen Messschirm abgebildet. Die Reflektorflächen des zweiten Reflektorsegmentes 12 sind so ausgelegt, dass diese relativ kleinen Lichtflecken 14 relativ nah an der vorgegebenen Hell-/Dunkelgrenze 15 angeordnet sind und diese somit relativ scharf ausgebildet ist. Die kleinen Lichtflecken 14 der Verstärkungslichtverteilungen 13 sind relativ intensitätsstark und erzeugen eine scharfe Hell-/Dunkelgrenze 15.

Die Abschatterleiste 5 bewirkt, dass auf einer der Lichtaustrittsrichtung 6 bzw. einer nicht dargestellten Abdeckscheibe der Beleuchtungseinheit 1 zugewandten Seite der Lichtquellen 4 ein Teil des Lichtbündels 8 absorbiert wird, so dass ein vergleichweise intensitätsstarker und Hell-/Dunkelgrenze bestimmender Grenzlichtstrahl 16 gebildet ist, der unmittelbar auf die Hell-/Dunkelgrenze trifft. In Verbindung mit den Grenzlichtstrahlen 16 der weiteren Lichtquellen 4 wird eine Grenzlichtstrahllinie 17 gebildet, die mit der Hell-/Dunkelgrenze 15 zusammenfällt.

Der Abschatter 5 kann als durchgehender Abschatter, wie in Figur 1, ausgebildet sein, so dass unerwünschtes seitliches Streulicht der Lichtquellen 4 verhindert wird. Alternativ kann der Abschatter 5 auch punktuell den einzelnen Lichtquellen 4 zugeordnet sein, wobei durch eine bogenförmige Formgebung einer unerwünschten Erzeugung von seitlichem Streulicht der Lichtquellen 4 entgegenwirkt werden kann.

Der Reflektor 2 kann in einem kastenförmigen Gehäuse 30 untergebracht sein, wobei vertikale Seitenflächen reflektierend ausgebildet sein können. Auf diese Weise kann eine relativ breite Streuung des austretenden Lichtbündels erzeugt werden.

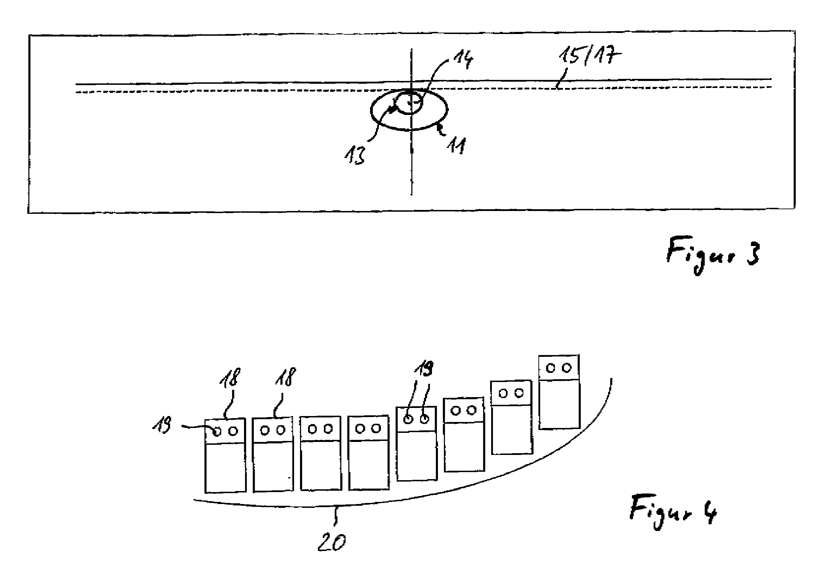

Die beiden in Figur 3 dargestellten Lichtverteilungen 11 und 13 werden durch die in der Figur 1 dargestellte mittlere Lichtquelle 4 erzeugt. In einem Abstand zu dieser Lichtquelle 4 können sich in horizontaler Richtung weitere Lichtquellen 4 erstrecken, wobei eine entsprechend vorgegebene breite Lichtverteilung erzeugbar ist.

Nach einer zweiten Ausführungsform der Erfindung gemäß Figur 4 sind Beleuchtungsmodule 18 mit jeweils zwei Lichtquellen 19 bestückt und gemäß einer Neigung bzw. Feilung modular angeordnet. Die einzelnen Beleuchtungsmodule 18 entsprechen der Beleuchtungseinheit 1 gemäß Figur 1, wobei im Unterschied zu derselben lediglich zwei Lichtquellen 19 je Beleuchtungseinheit bzw. Beleuchtungsmodul 18 vorgesehen sind. Die Breite dieser Beleuchtungsmodule 18 sind dementsprechend geringer als die der Beleuchtungseinheit 1, was zu einer entsprechend gefeilten oder geneigten Anordnung ausgenutzt werden kann. In Lichtaustrittsrichtung vor den Beleuchtungsmodulen 18 ist eine optikfreie eine Abdeckscheibe 20 angeordnet.

Alternativ können die Beleuchtungsmodule 18 auch in einer geraden Reihe in vertikaler und/oder horizontaler Richtung angeordnet sein. Darüber hinaus können die Beleuchtungsmodule 18 auch in einem Quadrat angeordnet sein, wobei dieselben bezüglich einer horizontalen Mittelebene symmetrisch angeordnet sind.

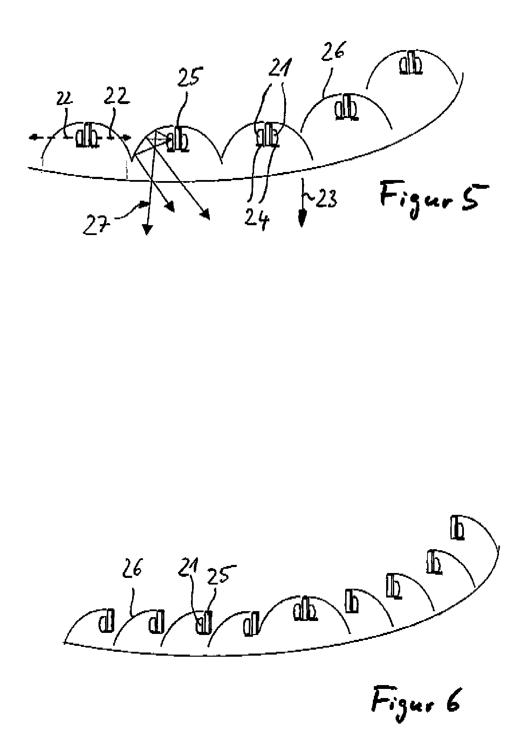

Nach einem weiteren Ausführungsbeispiel gemäß Figur 5 sind Lichtquellen 21 derart angeordnet, dass eine Hauptabstrahlrichtung 22 derselben in horizontaler Richtung und senkrecht zur Lichtaustrittsrichtung 23 orientiert ist. Es erfolgt somit im Unterschied zu dem ersten Ausführungsbeispiel gemäß Figur 1 eine seitliche Abstrahlung, statt einer Abstrahlung der Lichtbündel nach unten. Den Lichtquellen 21 sind jeweils Abschatter 24 zugeordnet, die randseitig an denselben auf einer der Lichtaustrittsrichtung 23 zugewandten Seite angeordnet sind. Die Lichtquellen 19 sind paarweise an einem gemeinsamen Träger 25 montiert.
Nach einer alternativen Ausführungsform gemäß Figur 6 können die Lichtquellen 21 auch einzeln auf dem Träger 25 angeordnet sein, so dass eine größere Neigung bzw. Feilung ermöglicht wird. Den Lichtquellen 21 sind jeweils ein halbparabolloid- oder halbellipsoidförmiger Reflektor 26 zugeordnet, der das abgestrahlte Lichtbündel 27 entsprechend einer vorgegebenen Lichtverteilung - siehe Ausführungen zum Ausführungsbeispiel gemäß Figur 1 - reflektiert.

Es versteht sich, dass die Form der Reflektoren in den vorgenannten Ausführungsbeispielen je nach Anwendung verändert werden kann.

## Patentansprüche

1. Beleuchtungseinheit für Kraftfahrzeuge mit mindestens einer im Brennpunkt eines Reflektors angeordneten Lichtquelle, wobei die Hauptabstrahlachse der Lichtquelle in einem spitzen Winkel geneigt zu dem Reflektor angeordnet ist, **dadurch gekennzeichnet, dass** am Rand der Lichtquelle (4, 19, 21) ein Abschatter (5, 24) angeordnet ist, derart, dass ein Randbereich eines von der Lichtquelle (4, 19, 21) ausgesandtes Lichtbündels (8) abgeschirmt wird und dass eine durch den Abschatter (5, 24) begrenzte Grenzstrahllinie (17) gebildet wird zur Erzeugung einer scharfen Hell-/Dunkelgrenze (15).

2. Beleuchtungseinheit nach Anspruch 1, **dadurch gekennzeichnet, dass** der Abschatter (5, 24) auf einer solchen Seite der Lichtquelle (4, 19, 21) angeordnet ist, derart, dass Grenzstrahlen (16) der Grenzstrahllinie (17) auf ein am weitesten von der Lichtquelle (4, 19, 21) angeordneten Fläche des Reflektors (2) treffen zur Bildung von relativ kleinen Lichtflecken (14) entlang der Hell-/Dunkelgrenze (15).

3. Beleuchtungseinheit nach Anspruch 1 oder 2, **dadurch gekennzeichnet, dass** der Abschatter (5, 24) auf einer der Lichtaustrittsrichtung (6) zugewandten Seite der Lichtquelle (4, 19, 21) angeordnet ist.

4. Beleuchtungseinheit nach einem der Ansprüche 1 bis 3, **dadurch gekennzeichnet, dass** der Reflektor (2, 26) halbparabolloidförmig oder halbellipsoidförmig oder halbzylinderförmig ausgebildet ist.

5. Beleuchtungseinheit nach einem der Ansprüche 1 bis 4, **dadurch gekennzeichnet, dass** die Lichtquelle (4, 19, 21) und/oder der Abschatter (5, 24) entlang einer Brennlinie des Reflektors (2, 26) angeordnet ist.

6. Beleuchtungseinheit nach einem der Ansprüche 1 bis 5, **dadurch gekennzeichnet, dass** der Reflektor (2) derart zu der Lichtquelle (4) ausgebildet ist, dass in einem zu der Lichtquelle (4) nahen ersten Reflektorsegment (9) Reflektorflächen angeordnet sind, die das von der Lichtquelle emittierte Lichtbündel (8) entsprechend relativ großer Lichtflecken zur Bildung einer Basislichtverteilung (11) unterhalb der Hell-/Dunkelgrenze (15) abbilden, und dass in einem zu der Lichtquelle (4) fernen zweiten Reflektorsegment (12) Reflektorflächen angeordnet sind, die das von der Lichtquelle (4) emittierte Lichtbündel (8) entsprechend relativ kleiner Lichtflecken (14) zur Bildung einer Verstärkungslichtverteilung (13) direkt unter der Hell-/Dunkelgrenze (15) abbilden.

7. Beleuchtungseinheit nach einem der Ansprüche 1 bis 6, **dadurch gekennzeichnet, dass** die Lichtquelle (4, 19, 21) als Halbleiterlichtquelle, insbesondere als lichtemittierende Diode (LED), ausgebildet ist.

8. Beleuchtungseinheit nach einem der Ansprüche 1 bis 7, **dadurch gekennzeichnet, dass** die Lichtquellen (4, 19, 21) derart beabstandet zueinander angeordnet sind, dass die Hauptabstrahlrichtungen (7) der Lichtquellen (4) in vertikaler Richtung nach unten orientiert sind oder dass die Hauptabstrahlrichtung (22) der Lichtquellen (21) in horizontaler Richtung senkrecht zur Lichtaustrittsrichtung (23) orientiert sind.

9. Beleuchtungseinheit nach einem der Ansprüche 1 bis 8, **dadurch gekennzeichnet, dass** mindestens zwei Lichtquellen (19) und ein Reflektor zu einem Beleuchtungsmodul (18) zusammengefasst sind, die entsprechend einer vorgegebenen Karosseriekontur unter Bildung einer Neigung und/oder Feilung benachbart zueinander angeordnet sind.

10. Beleuchtungseinheit nach einem der Ansprüche 1 bis 9, **dadurch gekennzeichnet, dass** das Beleuchtungsmodul (18) vertikale Seitenflächen aufweist, die auf einer Innenseite reflektierend ausgebildet sind.
